# EUROPEAN PATENT APPLICATION

(11) **EP 2 559 912 A1**
(43) Date of publication of application: **20.02.2013**
(21) Application number: 12180552.7
(22) Date of filing: 15.08.2012
(51) Int. Cl.: F16H 57/032

(54) **Frame and shell gearbox housing**

(30) Priority: 15.08.2011 US 201113209777
(71) Applicant: Hamilton Sundstrand Corporation, Windsor Locks, CT 06096-1010 (US)
(72) Inventor: Bell, Melissa A., San Diego, CA California 92127 (US); Moore, Jeffrey L., Lakeside, CA California 92040 (US)
(74) Representative: Tomlinson, Kerry John

(57) **Abstract**

A gearbox (14) housing to enclose a gearbox with a geartrain and a lubrication system includes a frame (32) made of a first material to carry gearbox loads; and a shell (40) made of a second material to connecting to the frame and to keep lubrication sealed within the lubrication system.

## Description

### BACKGROUND

This application relates to a gearbox housing, and more particularly to a gearbox housing including a frame and shell.

A gearbox can provide speed and torque conversions from a rotating power source to another device using gear ratios. Gearboxes often are used to increase torque while reducing the speed of a prime mover output shaft (e.g., a motor crankshaft). This results in the output shaft of the gearbox rotating at slower rate than the input shaft, with the reduction in speed producing an increase in torque and a mechanical advantage. Alternatively, a gearbox can provide an increase in shaft speed with a reduction in torque. A simple gearbox could just change the physical direction in which power is transmitted. Gearboxes are used in many different applications, including in automotive equipment, industrial equipment, aircrafts, construction equipment, etc.

Gearboxes typically include a gear train, which is a number of gears with bearings for driving different components and a lubrication system to lubricate and cool the gear train. Many gearboxes also generally have a housing to enclose the gear train and lubrication system. The housing sometimes is inclusive of a lubricant reservoir generally located at the bottom, and can seal an air-oil mixture inside of the gearbox housing to provide constant lubrication to the geartrain. Housings are typically a metallic material and can be made from a casting and /or machining process.

Gearboxes on aircraft can be mounted in different locations depending on function. One such location is an Auxiliary Power Unit ("APU") where a number of gears are strategically located to drive different APU components. APU gearboxes typically have mounting locations to mount the APU to an aircraft structure. Gearbox housings for APU applications are generally aluminum and made from a sand casting to incorporate the specific features according to individual gearbox design requirements.

### SUMMARY

A gearbox housing to enclose a gearbox with a geartrain and a lubrication system includes a frame made of a first material to carry gearbox loads; and a shell made of a second material to connect to the frame and to keep lubrication sealed within the lubrication system.

A method of manufacturing a gearbox housing to hold a gearbox with a lubrication system includes forming a frame structure of a first material to carry gearbox loads; forming a shell structure of a second material to connect to the frame structure and to keep lubricant within the lubrication system; and connecting the frame structure to the shell structure.

### BRIEF DESCRIPTION OF THE DRAWINGS

FIG. 1 is a perspective view of an APU with a gearbox.

FIG. 2A is a perspective view of the back (inside) of a gearbox with housing.

FIG. 2B is a perspective view of the front (outside) of the gearbox with housing of FIG. 2A.

FIG. 3A is a simplistic schematic illustration of a gearbox housing with shading to show a frame and shell.

FIG. 3B shows a cross section view of FIG. 3A.

### DETAILED DESCRIPTION

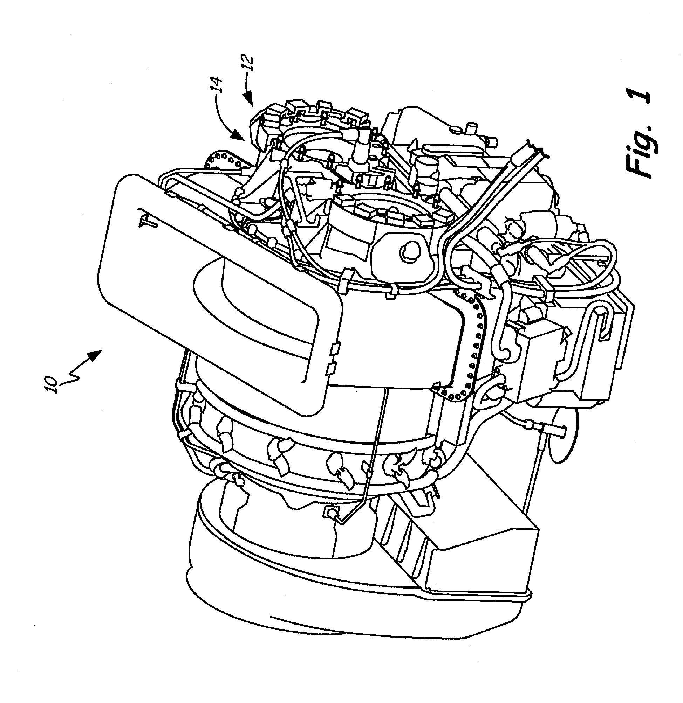

FIG. 1 is a perspective view of APU 10 with gearbox 12. Gearbox 12 includes gearbox housing 14.

Gearbox 12 has an internal geartrain which drives APU components, for example, generators, starters, and fuel pumps. Gearbox 12 geartrain and various APU components often require lubrication to function properly. This lubrication is usually in the form of oil, which can be delivered through lubrication tubes within the gearbox, and also entrained in the air inside gearbox housing 14 and APU 10 and can form a reservoir in the bottom of gearbox housing 14. To keep lubrication within gearbox 12 and APU lubrication system (and thus properly lubricating the geartrain and other components), housing 14 connects to APU 10 to form a sealed enclosure around gearbox 12 and APU components. This keeps the air-entrained lubricant and lubricant reservoir within the system. Housing 14 can be bolted onto APU 10, and can be sealed with a face seal, an o-ring against a flange or any other sealing method depending on system requirements.

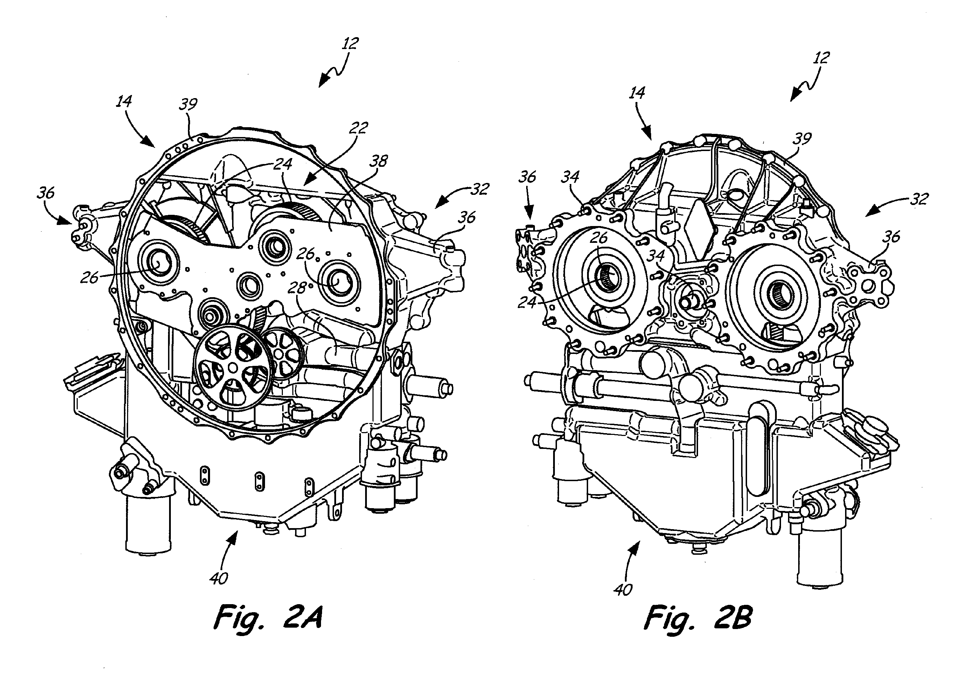

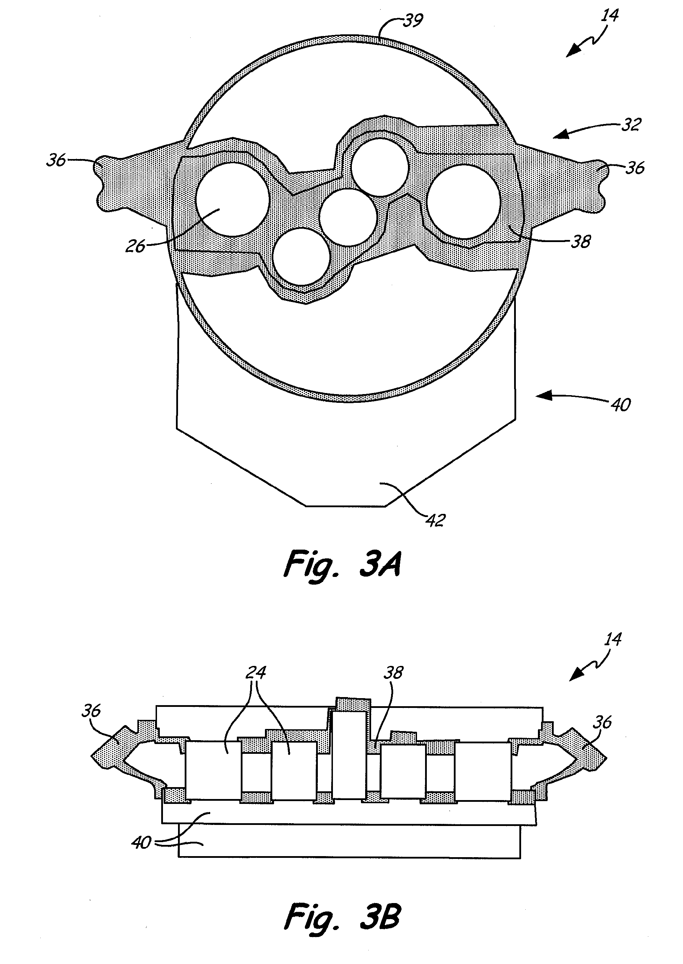

FIG. 2A is a perspective view of the back (inside) of gearbox 12 with housing. Though not shown here, gearbox 12 can connect to another structure, such as an APU 10 (see FIG. 1). FIG. 2B is a perspective view of the front (outside) of gearbox 12 with housing of FIG. 2A. Gearbox 12 includes geartrain 22 with gears 24, bores 26, lubrication passages 28, and housing 14. Housing 14 includes frame 32 with outer portion to connect to other structures and components (flanges 34, mounts 36, and APU connection piece 39) and inner portion to carry loads from gear train 22 (carrier plate 38). Housing 14 also includes shell 40 (with bottom portion 42 defining an oil reservoir, see figure 3A). Frame 32 is shaded for viewing purposes only. Lubrication system for gearbox 12 and APU 10 can include lubrication passages 28, oil reservoir in portion 42 of shell 40 and an oil mist entrained in the air of gearbox 12 and APU 10.

Gears 24 (with bearings) are supported by bores 26 in carrier plate 38. Carrier plate 38 supports gear train 22. Carrier plate 38, APU connection piece 39, mounts 36 and flanges 34 are connected to form frame 32 of housing 14. Shell 40 surrounds gears 24 and is connected to frame 32. Shell 40 can be connected to frame 32 by bolting together, bonding together or another method depending on system requirements. Mounts 36 can be connected to APU connection piece 39 and carrier plate 38 and serve as supports to mount gearbox 12 and/or APU 10 (see FIG. 1) to an aircraft. APU connection piece 39 is connected to shell 40, and bolts gearbox 12 onto APU 10. This can be a sealed connection, so that lubrication stays within gearbox 12 and APU 10 to lubricate gearbox 12 and APU 10.

Geartrain 22 drives various APU components (not shown) such as generators, starters, and fuel pumps. Housing frame 32 acts to hold lubrication system and to carry gearbox 12 loads. Shell 40 works (in conjunction with other parts) to encompass geartrain 22 to keep lubrication within gearbox 12 and APU 10. Shell 40 can define an oil reservoir in bottom portion 42. Shell 40 forms airtight seals when connected to other parts (such as APU 10) so that lubrication entrained in air cannot escape from within gearbox 12 and APU 10, and will be available to properly lubricate gear train 22 and APU components. Shell 40 can be made of various materials, depending on system requirements, such as composites, fiberglass, molded materials, sheet metal or other various rigid or plyable materials.

Housing frame 32 carries gearbox 12 loads through frame 32. Carrier plate 38 carries loads from gear train 22. Mounts 36 can be used to mount gearbox 12 and/or APU 10 in an aircraft. Mounts 36 can be made of fireproof materials to comply with various safety requirements and standards for APUs, gearboxes and/or engines. Flanges 34 can be used to mount other components onto gearbox 12, for example, a generator. Frame 32 can be made of various materials depending on the loads it is required to carry. Suitable materials may be a metallic material (including various alloys) such as aluminum, steel or titanium. It can be made from machining, casting or a combination of both. Housing frame 32 and/or shell 40 can be made of fireproof materials to comply with code requirements for gearbox 12.

By using frame 32 and shell 40, housing 14 provides sufficient strength to carry system loads and provides a sealed environment for preserving lubrication within the system while maintaining minimal weight compared to past gearbox housings. Past gearbox housings were typically fully metallic and were made by sand casting one or two parts. Because each individual gearbox has different requirements in terms of geometric set-up, number of gears, lubrication system, etc., a new casting was required to make each new gearbox housing. This resulted in a very expensive manufacturing process for gearbox housings. Additionally, sand casting the gearbox housing resulted in design limitations. Sand casting can only cast walls to a certain minimum thickness, typically about 1/8 inch (about 3.175 mm). Because many of the walls of a gearbox housing do not need to carry loads, and simply need to form a seal to keep lubrication within the system, design requirements showed that the walls could be much thinner than 1/8 inch (3.175 mm). The wall thickness limitations of sand casting resulted in a large amount of unnecessary weight in the system. Minimal weight is especially critical when a gearbox is used in aircraft applications. Furthermore, due to the complex geometries of gearboxes, typical gearbox housing casting is a low yield process. The complexity of the casting of one or two parts to form the entire housing results in many attempts which form misshapen or otherwise unusable parts before a housing meeting the requirements is formed.

The current invention overcomes these limitations by forming a gearbox housing from two different components: a multi-piece frame made of a strong (possibly metallic) material for the purpose of carrying the required loads, and a shell made of a different material for example that can be light-weight and thin to preserve lubrication within the system. Frame 32 can be machined or cast (or both) in one or multiple parts. Frame 32 can be made of a first material and generally consist of an outer portion to mount gearbox 12 to other objects or mount other components to gearbox 12 (mounts 36, flanges 34, APU connection 39) and an inner portion to carry loads from gear train 22 (carrier plate 38). Shell 40 can be made from a second thin and light-weight material, such as composite or fiberglass and enclose the gear train 32 and define a lubricant reservoir in a bottom portion 42. Shell 40 can attach to frame 32 to form housing 14 that is lighter-weight and more economical to manufacture than past housings, while still having the capability to carry the required loads and keep lubrication within the system. Additionally, shell 40 and frame 32 can be made of fireproof materials to comply with various safety requirements.

FIG. 3A is a simplified schematic illustration of the gearbox housing of FIGS. 2A-2B, with shading to show the frame and shell. FIG. 3B shows a simplistic schematic illustration from the top of a cross-sectional view of FIG. 3A. Gearbox housing 14 includes frame 32 with mounts 36, carrier plate 38 and APU connection piece 39. Frame 32 is shaded for viewing purposes only. Carrier plate 38 includes bores 26 for supporting gears 24 (with bearings). Housing 14 also includes shell 40 with lubrication reservoir portion 42.

Shell 40 is attached to frame 32 by bolting, bonding or another method depending on system requirements. Frame 32 can be made by machining, casting, molding or a combination of methods to form one or more parts. If frame 32 is formed with more than one part, parts can be joined by bolting together or another attachment method, depending on system requirements.

Shell 40 and frame 32 work together to form a light-weight housing 14 which can carry gearbox loads and keep lubrication within gearbox and APU system. Frame 32 is formed of a first material, which can be metallic or another strong material to carry gearbox 12 loads. Shell 40 can be made of a second material that can be lighter in weight, as it simply has to ensure lubrication (in the form of oil in reservoir portion 42 and an oil mist entrained in the air) stays within the system to properly lubricate gears 24 and other APU parts.

Forming housing 14 of two separate parts results in a gearbox housing 14 that can be more economically formed, lighter in weight, greater in fire resistance capability and can still function as required. Housing 14 eliminates the need in prior art gearbox housing manufacturing to make a new cast every time a gearbox housing is needed. This results in savings in the manufacture process, as the proposed manufacturing method has a higher success rate versus a sand casting. New design lead time can be reduced in cost and time to market by using machine manufacturing techniques instead of casting. Additionally, by forming shell 40 with a light-weight material, walls of shell 40 can be made thinner than the limits that the casting process can form walls (about 1/8 inch, 3.175 mm). The thinner walls of shell 40, along with the possibility of using materials lighter than the metallic materials used in past gearbox housings can result in large weight reductions and improved fire resistance for gearbox housing 14.

While gearbox housing 14 has been shown above to include frame 32 carrying five gears 24 with shell 40, this set-up is for example purposes only, and different combinations of gears, placements and shapes could be formed. For example, gearbox housing 14 could be formed of frame 32 holding only 3 gears in a different geometrical set-up and not including mounts or flanges. Another example can be that shell 40 could encompass all or nearly all of frame 32.

While the gearbox and gearbox housing above has been discussed in relation to use with an APU, the current invention is not limited to APU applications and can be used in any other system where a gearbox is needed.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A gearbox housing (14) to enclose a gearbox (12) with a geartrain and a lubrication system, the housing comprising:
a frame (32) made of a first material to carry gearbox loads; and
a shell (40) made of a second material to connect to the frame and to keep lubrication sealed within the lubrication system.

2. The gearbox housing of claim 1, wherein the frame (32) comprises:
an outer mount portion (39) to mount the gearbox to another structure; and
a support portion (38) to carry loads from the geartrain while connected to the outer mount portion.

3. The gearbox housing of claim 1 or 2, wherein the shell (40) comprises:
a structure that encloses the geartrain and comprises a lubricant reservoir.

4. The gearbox housing of claim 1, 2 or 3 wherein the frame (32) is made of a metallic material, and/or wherein the shell (40) comprises one of the following materials: fiberglass, composites, molded material and sheet metal.

5. The gearbox housing of any preceding claim, wherein the frame (32) carries loads from one or more of: gears, mounts, and mounted components.

6. The gearbox housing of any preceding claim, wherein the shell (40) connects to the frame (32) and an additional structure to form an enclosure fully surrounding the gearbox (12), and wherein the enclosure fully surrounding the gearbox is preferably sealed to keep lubrication within the enclosure.

7. The gearbox housing of any preceding claim, wherein the frame comprises:
a plate (38) for support of the geartrain.

8. The gearbox housing of any preceding claim, wherein the frame (32) comprises:
mounts (36) for mounting the gearbox to another structure, and preferably for sealing the lubrication within the gearbox housing and the structure, and/or external mounts for mounting the gearbox and the separate structure to a third structure, and/or flanges (34) to mount other components to the gearbox.

9. The gearbox with the housing of claim 8, wherein one or more of the following are fireproof: the housing, the mounts and the flanges.

10. A method of manufacturing a gearbox housing (14) to hold a gearbox (12) with a lubrication system, the method comprising:
forming a frame structure (32) of a first material to carry gearbox loads;
forming a shell structure (40) of a second material to connect to the frame structure and to keep lubricant within the lubrication system; and connecting the frame structure to the shell structure.

11. The method of claim 10, wherein the step of forming a frame structure (32) to carry gearbox loads comprises:
machining a metallic material to form a structure for carrying loads from one or more of: gearbox gears, flanges for mounting components to the gearbox, and mounts for mounting the gearbox to a structure.

12. The method of claim 10 or 11, wherein the step of forming a frame structure (32) to carry gearbox loads comprises:
forming an outer portion (39) of the frame to connect the gearbox to one or more other structures; and
forming an inner portion (38) of the frame to carry loads from the gears and connecting to the outer portion.

13. The method of claim 10, 11 or 12, wherein the step of connecting the frame structure (32) to the shell structure (40) comprises:
bolting or bonding the frame structure to the shell structure.

14. The method of any one of claims 10 to 13, wherein the step of forming a shell structure (40) to connect to the frame structure (32) and to keep lubricant within lubrication system comprises:
forming a shell structure to hold a lubricant reservoir and to enclose at least a portion of the gearbox to keep any air-entrained lubrication within the lubrication system.

15. A gearbox with a housing according to any one of claims 1 to 9, the gearbox with the housing comprising:
a gearbox (12) with a plurality of gears;
a lubrication system to lubricate the geartrain; and
the housing which fits around at least a portion of the gearbox.
